# EUROPÄISCHE PATENTANMELDUNG

(11) **EP 4 559 607 A1**
(43) Veröffentlichungstag der Anmeldung: **28.05.2025**
(21) Anmeldenummer: 23211869.5
(22) Anmeldetag: 23.11.2023
(51) Int. Cl.: B23F 23/08, B23F 23/12, B23F 15/00, B23F 17/00

(54) **VERFAHREN ZUM HERSTELLEN VON VERZAHNUNGEN MIT DEFINIERTER WINKELLAGE**

(71) Anmelder: Klingelnberg AG, 8050 Zürich (CH)
(72) Erfinder: Brieden, Christian, 42499 Hückeswagen (DE)
(74) Vertreter: Janke Scholl Patentanwälte PartG mbB

(57) **Zusammenfassung**

Hartfeinbearbeiten eines Bauteils (100), wobei das Bauteil (100) eine erste Verzahnung (101) und eine zweite Verzahnung (102) aufweist, wobei für das Bauteil (100) eine Soll-Winkellage der zweiten Verzahnung (102) relativ zur ersten Verzahnung (101) definiert ist. Die Identifikation einer Referenz zum Erreichen der Soll-Winkellage erfolgt durch einen Musterabgleich gemessener Ist-Winkelabstände zu vorgegebenen Soll-Winkelanständen.

## Beschreibung

Die vorliegende Erfindung betrifft ein Verfahren, mit den Verfahrensschritten: Bereitstellen eines Bauteils, wobei das Bauteil eine erste Verzahnung und eine zweite Verzahnung aufweist, wobei für das Bauteil eine Soll-Winkellage der zweiten Verzahnung relativ zur ersten Verzahnung definiert ist, und wobei die Soll-Winkellage als Soll-Winkelabstand eines Referenzzahns und/oder einer Referenzlücke der ersten Verzahnung zu einem Zahn und/oder einer Lücke der zweiten Verzahnung angegeben ist; Identifikation des Referenzzahns und/oder der Referenzlücke der ersten Verzahnung; Hartfeinbearbeiten der zweiten Verzahnung des Bauteils, wobei die Zähne der zweiten Verzahnung unter Berücksichtigung der Position des Referenzzahns und/oder der Referenzlücke der ersten Verzahnung bearbeitet werden, um eine Ist-Winkellage der zweiten Verzahnung relativ zur ersten Verzahnung entsprechend der vorgegebenen Soll-Winkellage zu fertigen.

In der Elektromobilität werden kompakte Getriebe eingesetzt, um einen möglichst effizienten Betrieb des elektrischen Antriebsstrangs zu gewährleisten. Das Getriebe ermöglich dabei, einen Elektromotor in einem verbrauchsarmen Drehzahlbereich zu betreiben.

Für Getriebewellen, die beispielsweise zwei Festräder aufweisen, wird häufig eine relative Winkellage zwischen den Verzahnungen der Festräder definiert, um z.B. eine zuverlässige Montage zu ermöglichen.

Jede relative Lagebeziehung zwischen zwei Objekten erfordert eine geometrische Referenz, gegenüber derer die relative Position dieser Objekte zueinander definiert ist. Diese Referenz wird im Stand der Technik für die beiden Verzahnungen z.B. als ein Zahn einer der beiden Verzahnungen definiert. Ein solcher Zahn kann als Referenzzahn bezeichnet werden. Bezüglich dieses Referenzzahns der einen Verzahnung wird eine Winkelposition eines Zahns der jeweils anderen Verzahnung bemaßt und toleriert.

Sofern das Bauteil nach dem Feinbearbeiten der ersten Verzahnung und vor dem Feinbearbeiten der zweiten Verzahnung umgespannt wird, muss der betreffende Referenzzahn nach dem erneuten Spannen des Bauteils und vor dem Beginn der Feinbearbeitung der zweiten Verzahnung identifiziert werden. Denn nur dann kann die Feinbearbeitung der zweiten Verzahnung derart erfolgen, dass die geforderten Toleranzen zur Relativposition der zweiten Verzahnung gegenüber dem Referenzzahn eingehalten werden.

Zur Identifikation des Referenzzahns ist es im Stand der Technik bekannt, dass der Referenzahn oder das Bauteil eine Markierung aufweisen, anhand derer der Referenzzahn erkannt werden kann. Die Markierung kann z.B. eine Bohrung im Bereich eines an die Verzahnung angrenzenden Bereichs des Bauteils oder z.B. eine Markierung eines Zahnkopfs des Referenzzahns selbst sein, z.B. in Form einer farblichen Markierung, einer Einkerbung, einer adhäsiv applizierten Markierung oder dergleichen.

Das Erzeugen der Markierung stellt einen zusätzlichen, unproduktiven Fertigungsschritt dar, der die Bearbeitungsdauer insgesamt erhöht. Zudem muss der betreffenden, die erste Verzahnung feinbearbeitenden Verzahnmaschine eine Einrichtung zum Erzeugen der Markierung zugeordnet sein, die eigens für diesen Zweck konstruiert und vorgehalten werden muss.

Weiter ist die Verwendung einer solchen Markierung dahingehend nachteilig, dass eine zur Fertigung der zweiten Verzahnung verwendete Verzahnmaschine eine Einrichtung zum Erfassen einer solchen Markierung aufweisen muss, die ggf. zusätzlich zu etwaigen Mess- oder Bearbeitungsmitteln der Verzahnmaschine eigens für diesen Zweck vorgesehen ist.

Der vorliegenden Erfindung liegt daher die technische Problemstellung zugrunde, ein effizientes Verfahren zum Herstellen eines Bauteils anzugeben, das zwei Verzahnungen mit vorgegebener relativer Winkellage aufweist.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Bereitstellen eines Bauteils, wobei das Bauteil eine erste Verzahnung und eine zweite Verzahnung aufweist, wobei für das Bauteil eine Soll-Winkellage der zweiten Verzahnung relativ zur ersten Verzahnung definiert ist, und wobei die Soll-Winkellage als Soll-Winkelabstand eines Referenzzahns und/oder einer Referenzlücke der ersten Verzahnung zu einem Zahn und/oder einer Lücke der zweiten Verzahnung angegeben ist; Identifikation des Referenzzahns und/oder der Referenzlücke der ersten Verzahnung; Hartfeinbearbeiten der zweiten Verzahnung des Bauteils, wobei die Zähne der zweiten Verzahnung unter Berücksichtigung der Position des Referenzzahns und/oder der Referenzlücke der ersten Verzahnung bearbeitet werden, um eine Ist-Winkellage der zweiten Verzahnung relativ zur ersten Verzahnung entsprechend der vorgegebenen Soll-Winkellage zu fertigen. Das Verfahren zeichnet sich dadurch aus, dass die Identifikation des Referenzzahns und/oder der Referenzlücke der ersten Verzahnung erfolgt, indem vorgegebenen Soll-Winkelabständen gemessene Ist-Winkelabstände zugeordnet werden, wobei die Soll-Winkelabstände vorgegebene Winkelabstände der Zähne und/oder Lücken der ersten Verzahnung relativ zu den Zähnen und/oder Lücken der zweiten Verzahnung entsprechend der vorgegebenen Soll-Winkellage sind und wobei die gemessenen Ist-Winkelabstände die am bereitgestellten Bauteil vor der Hartfeinbearbeiten der zweiten Verzahnung bestehenden Winkelabstände der Zähne und/oder Lücken der ersten Verzahnung relativ zu den Zähnen und/oder Lücken der zweiten Verzahnung sind.

Der Erfindung liegt grundsätzlich die Idee zugrunde, eine sich aus der vorgegebenen Bauteilkonstruktion ergebende Anordnung, insbesondere sich ein sich ergebendes Muster, der relativen Abstände der Zähne und/oder Lücken der beiden Verzahnungen zu nutzen, um einzelne Zähne und/oder Lücken, d.h. insbesondere den Referenzzahn und/oder die Referenzlücke, eindeutig zu identifizieren. Denn die durch die Bauteilkonstruktion vorgegebenen Winkelabstände sollten insbesondere nach einem Vorverzahnen der ersten und zweiten Verzahnung und nach einem Feinbearbeiten der ersten Verzahnung, vor dem Feinbearbeiten der zweiten Verzahnung bereits an dem Bauteil erkennbar sein. So kann insbesondere durch einen Abgleich einer zu erwartenden Anordnung bzw. eines zu erwartenden Musters der Winkellagen aus der Bauteilkonstruktion mit einer am Bauteil gemessenen Anordnung bzw. einem gemessenen Muster, ein Zuordnen der gefertigten Zähne und/oder Lücken zu den Zähnen und/oder Lücken gemäß der Konstruktion erfolgen, um den bemaßten und tolerierten Winkelabstand der Referenz zu finden - d.h. den Referenzzahn und/oder die Referenzlücke zu identifizieren.

Mit anderen Worten können der Referenzzahn und/oder die Referenzlücke erfindungsgemäß daher insbesondere dadurch identifiziert werden, dass ein charakteristisches Muster von Soll-Winkelabständen mit gemessenen Ist-Winkelabständen abgeglichen wird. So kann erfindungsgemäß auf eine gesonderte Markierung zum Identifizieren des Referenzzahns und/oder der Referenzlücke verzichtet werden. Sowohl das Erzeugen als auch das Erfassen der Markierung und auch die hierzu erforderlichen Betriebsmittel können daher im Vergleich zum Stand der Technik entfallen. Das erfindungsgemäße Vorgehen zur Identifikation eines Referenzzahns und/oder einer Referenzlücke ist gegenüber dem Stand der Technik daher insgesamt schneller und kostengünstiger.

Es wird somit ein effizientes Verfahren zum Herstellen eines Bauteils angegeben, das zwei Verzahnungen mit vorgegebener relativer Winkellage aufweist.

Die erste Verzahnung kann als eine der folgenden Verzahnungsarten ausgebildet sein: Geradverzahnung, Schrägverzahnung Pfeilverzahnung, Doppelschrägverzahnung, Beveloidverzahnung.

Die zweite Verzahnung kann als eine der folgenden Verzahnungsarten ausgebildet sein: Geradverzahnung, Schrägverzahnung Pfeilverzahnung, Doppelschrägverzahnung, Beveloidverzahnung.

Die erste Verzahnung kann eine Außenverzahnung oder eine Innenverzahnung sein.

Die zweite Verzahnung kann eine Außenverzahnung oder eine Innenverzahnung sein.

Die erste Verzahnung kann eine Laufverzahnung sein. Die erste Verzahnung kann zum Wandeln von Drehzahlen und Drehmomenten mit einer zugeordneten, mit der ersten Verzahnung kämmenden weiteren Verzahnung durch eine Drehübertragung im Wälzkontakt eingerichtet sein - insbesondere innerhalb eines Getriebes.

Die zweite Verzahnung kann eine Laufverzahnung sein. Die zweite Verzahnung kann zum Wandeln von Drehzahlen und Drehmomenten mit einer zugeordneten, mit der ersten Verzahnung kämmenden weiteren Verzahnung durch eine Drehübertragung im Wälzkontakt eingerichtet sein - insbesondere innerhalb eines Getriebes.

Der Soll-Winkelabstand kann auf eine Rotationsachse des Bauteils bezogen sein. Insbesondere kann der Soll-Winkelabstand z.B. in einer axialen Projektion in einer Ebene senkrecht zur Rotationsachse um die Rotationsachse definiert sein und als Ist-Winkelabstand entsprechend am Bauteil messbar sein.

Der Soll-Winkelabstand kann bezogen auf eine jeweilige Flankenmitte der betreffenden Zähne der ersten Verzahnung und/oder der zweiten Verzahnung definiert sein - und zwar z.B. für nächstgelegene Rechtsflanken und/oder nächstgelegene Linksflanken.

Der Soll-Winkelabstand kann jeweils auf einen Flankenpunkt eines betreffenden Zahns am jeweiligen Teilkreis der ersten Verzahnung und der zweiten Verzahnung definiert sein.

Es versteht sich, dass gleichermaßen eine Zahnlücke als Referenz herangezogen werden kann, wobei sich eine Ist-Position einer betreffenden Lücke wiederum aus der Ist-Position der gefertigten Flanken ergibt. Es ist daher für den Erfolg des Verfahrens unerheblich, ob eine Lücke oder ein Zahn als Referenz verwendet wird.

Soweit eine Referenz der Winkellage anhand einer Lücke der ersten Verzahnung relativ zu einer Lücke der zweiten Verzahnung definiert wird, kann von einem Referenzlückenpaar gesprochen werden.

Soweit eine Referenz der Winkellage anhand eines Zahns der ersten Verzahnung relativ zu einem Zahn der zweiten Verzahnung definiert wird, kann von einem Referenzzahnpaar gesprochen werden.

Die Referenz der Winkellage kann anhand eines Zahns der ersten Verzahnung relativ zu einer Lücke der zweiten Verzahnung definiert sein.

Die Referenz der Winkellage kann anhand einer Lücke der ersten Verzahnung relativ zu einem Zahn der zweiten Verzahnung definiert sein.

Es wird insbesondere genau ein Zahn der ersten Verzahnung als Referenzzahn definiert oder es wird insbesondere genau eine Lücke der ersten Verzahnung als Referenzlücke definiert. Bezüglich dieses Referenzzahns oder bezüglich dieser Referenzlücke der ersten Verzahnung wird der Soll-Winkelabstand einer Lücke oder eines Zahns der zweiten Verzahnung bemaßt und toleriert, um die Soll-Winkellage zu definieren.

Dieser Zahn oder diese Lücke der zweiten Verzahnung kann ein zum Referenzzahn oder zur Referenzlücke der ersten Verzahnung nächstgelegener Zahn der zweiten Verzahnung oder eine nächstgelegene Lücke der zweiten Verzahnung sein, oder kann ein beliebiger anderer Zahn der zweiten Verzahnung oder eine beliebige andere Lücke der zweiten Verzahnung sein. Denn durch die Definition des Soll-Winkelabstands eines Zahns oder einer Lücke der zweiten Verzahnung bezogen auf den Referenzzahn oder die Referenzlücke der ersten Verzahnung ist aufgrund der der jeweils als Laufverzahnung ausgebildeten ersten und zweiten Verzahnung inhärenten Symmetrie auch die relative Winkelposition aller weiteren Zähne und Lücken der zweiten Verzahnung zu dem Referenzahn der ersten Verzahnung und zu allen weiteren Zähnen und Lücken der ersten Verzahnung definiert.

Gemäß einer Ausgestaltung des Verfahrens kann vorgesehen sein, dass die Soll-Winkelabstände der Zähne und/oder Lücken, insbesondere nächstgelegener Zähne und/oder Lücken, aufeinanderfolgend im Uhrzeigersinn oder entgegen dem Uhrzeigersinn sortiert angegeben werden, um ein Soll-Muster der Soll-Winkelabstände anzugeben und die Ist-Winkelabstände nächstgelegener Zähne aufeinanderfolgend im Uhrzeigersinn oder entgegen dem Uhrzeigersinn sortiert angegeben werden, um ein Ist-Muster der Ist-Winkelabstände anzugeben, wobei die Identifikation des Referenzzahns und/oder der Referenzlücke anhand eines Vergleichs des Ist-Musters mit dem Soll-Muster erfolgt.

Es kann vorgesehen sein, dass das Soll-Muster für eine Auswahl benachbarter bzw. nächstgelegener Zähne oder für alle benachbarten bzw. nächstgelegenen Zähne bestimmt wird und/oder ausgewertet wird. Es kann vorgesehen sein, dass das Ist-Muster für eine Auswahl benachbarter bzw. nächstgelegener Zähne oder für alle benachbarten bzw. nächstgelegenen Zähne bestimmt wird und/oder ausgewertet wird. Je nach Zähnezahl der ersten und zweiten Verzahnung kann bereits ein teilweiser Abgleich zur Identifikation des Referenzzahns ausreichend sein. Bevorzugt findet ein vollständiger Abgleich statt.

Der Vergleich des Ist-Musters mit dem Soll-Muster kann anhand einer mathematischen Methode erfolgen, wie z.B. Best-Fit oder dergleichen, insbesondere softwarebasiert. D.h. das gemessene Ist-Muster wird derart über das vorgegebene Soll-Muster gelegt, dass die Abweichungen zwischen dem Ist-Muster und dem Soll-Muster möglichst gering sind bzw. minimiert sind. Auf diese Weise kann eine Zahn-für-Zahn-Zuordnung der Zähne des gemessenen Ist-Musters zu den Zähnen des Soll-Musters erfolgen oder es kann eine Lücke-für-Lücke-Zuordnung der Lücken des gemessenen Ist-Musters zu den Lücken des Soll-Musters erfolgen, um den Referenzzahn und/oder die Referenzlücke der ersten Verzahnung zu ermitteln.

Gemäß einer Ausgestaltung des Verfahrens kann vorgesehen sein, dass als Ergebnis der Zuordnung der Soll-Winkelabstände zu gemessenen Ist-Winkelabständen der Referenzzahn derjenige Zahn der ersten Verzahnung des Bauteils ist, dessen Ist-Winkelabstand dem Soll-Winkelabstand entsprechend der vorgegebenen Soll-Winkellage entspricht, wobei insbesondere ein Abgleich des Soll-Winkelabstands zum Ist-Winkelabstand für einen oder mehrere weitere Zähne und/oder Lücken der ersten Verzahnung erfolgt, um die Identifikation des Referenzzahns zu verifizieren.

Gemäß einer Ausgestaltung des Verfahrens kann vorgesehen sein, dass als Ergebnis der Zuordnung der Soll-Winkelabstände zu gemessenen Ist-Winkelabständen die Referenzlücke diejenige Lücke der ersten Verzahnung des Bauteils ist, deren Ist-Winkelabstand dem Soll-Winkelabstand entsprechend der vorgegebenen Soll-Winkellage entspricht, wobei insbesondere ein Abgleich des Soll-Winkelabstands zum Ist-Winkelabstand für einen oder mehrere weitere Zähne und/oder Lücken der ersten Verzahnung erfolgt, um die Identifikation der Referenzlücke zu verifizieren.

Es kann vorgesehen sein, dass die erste Verzahnung des bereitgestellten Bauteils vor dem Hartfeinbearbeiten der zweiten Verzahnung und vor der Identifikation des Referenzzahns und/oder der Referenzlücke bereits hartfeinbearbeitet worden ist.

Nach dem Hartfeinbearbeiten der ersten Verzahnung und vor dem Hartfeinbearbeiten der zweiten Verzahnung kann ein Umspannen des Bauteils erfolgt sein.

Gemäß einer Ausgestaltung des Verfahrens kann vorgesehen sein, dass das Hartfeinbearbeiten der ersten Verzahnung auf einer ersten Werkzeugmaschine erfolgt und das Hartfeinbearbeiten der zweiten Verzahnung auf einer zweiten Werkzeugmaschine erfolgt. Demnach kann das Bauteil nach dem Feinbearbeiten der ersten Verzahnung von einer Werkstückspindel der ersten Werkzeugmaschine demontiert und anschließend an einer Werkstückspindel der zweiten Werkzeugmaschine gespannt werden, um die zweite Verzahnung mittels der zweiten Werkzeugmaschine feinzubearbeiten. Vor der Feinbearbeitung der zweiten Verzahnung mittels der zweiten Werkzeugmaschine erfolgt die Identifikation des Referenzzahns und/oder der Referenzlücke der ersten Verzahnung.

Das Hartfeinbearbeiten der ersten Verzahnung kann ein Schaben oder ein Hartschälen oder ein Honen sein. Demnach kann die erste Verzahnung insbesondere mithilfe eines Verfahrens bearbeitet werden, das lediglich einen geringen axialen Überlauf benötigt und dementsprechend nahe an Kollisionsstrukturen verwendet werden kann, wie zum Beispiel in der Nähe der zur ersten Verzahnung benachbarten zweiten Verzahnung.

Insbesondere kann die erste Verzahnung einen kleineren Durchmesser aufweisen als die zweite Verzahnung. Gemäß alternativer Ausgestaltungen kann vorgesehen sein, dass die erste Verzahnung einen größeren Durchmesser aufweist als die zweite Verzahnung.

Die erste Verzahnung kann einen geringen axialen Abstand zur zweiten Verzahnung aufweisen, wobei der axiale Abstand insbesondere geringer ist als eine Zahnbreite der ersten Verzahnung und/oder eine Zahnbreite der zweiten Verzahnung, insbesondere geringer ist als eine halbe Zahnbreite der ersten Verzahnung und oder eine halbe Zahnbreite der zweiten Verzahnung.

Das Hartfeinbearbeiten der zweiten Verzahnung kann ein Schleifen sein, insbesondere ein Wälzschleifen. Die zweite Verzahnung kann z.B. mit dem sehr effizienten Wälzschleifen bearbeitet werden, insbesondere für den Fall, dass die zweite Verzahnung einen größeren Durchmesser aufweist als die erste Verzahnung und die erste Verzahnung somit insbesondere keine Kollisionsstruktur für die Bearbeitung der zweiten Verzahnung ausbildet.

Die erste Verzahnung kann eine kleinere Zähnezahl aufweisen als die zweite Verzahnung. Gemäß alternativer Ausgestaltungen kann vorgesehen sein, dass die erste Verzahnung eine größere Zähnezahl aufweist als die zweite Verzahnung.

Die erste Verzahnung kann einen kleineren Teilkreisdurchmesser aufweisen als die zweite Verzahnung. Gemäß alternativer Ausgestaltungen kann vorgesehen sein, dass die erste Verzahnung einen größeren Teilkreisdurchmesser aufweist als die zweite Verzahnung.

Die Zähnezahl der ersten Verzahnung und die Zähnezahl der zweiten Verzahnung können teilerfremd sein, wobei genau ein Zahn und/oder genau eine Lücke der ersten Verzahnung als Referenzzahn und/oder als Referenzlücke definiert sind.

Die Zähnezahl der ersten Verzahnung und die Zähnezahl der zweiten Verzahnung können gleiche Teiler aufweisen, wobei eine Anzahl als Referenzzähne geeigneter Zähne dem größten gemeinsamen Teiler bezüglich der Zähnezahl der ersten Verzahnung und der Zähnezahl der zweiten Verzahnung entspricht und wobei einer dieser als Referenzahn geeigneten Zähne der ersten Verzahnung als Referenzzahn definiert ist.

Die Zähnezahl der ersten Verzahnung und die Zähnezahl der zweiten Verzahnung können gleiche Teiler aufweisen, wobei eine Anzahl als Referenzlücken geeigneter Lücken dem größten gemeinsamen Teiler bezüglich der Zähnezahl der ersten Verzahnung und der Zähnezahl der zweiten Verzahnung entspricht und wobei einer dieser als Referenzlücke geeigneten Lücken der ersten Verzahnung als Referenzlücke definiert ist.

Nachfolgend wird die Erfindung anhand einer Ausführungsbeispiele darstellenden Zeichnung näher erläutert. Es zeigen jeweils schematisch:
- Fig. 1: ein Bauteil mit einer ersten Verzahnung und mit einer zweiten Verzahnung in einer perspektivischen Ansicht;
- Fig. 2: das Bauteil aus Fig. 1 in einer Seitenansicht;
- Fig. 3: das Bauteil aus Fig. 1 in einer Frontansicht;
- Fig. 4: eine vergrößerte Darstellung gemäß der Einzelheit Z aus Fig. 3;
- Fig. 5: Soll-Winkellagen einer ersten Verzahnung mit 23 Zähnen und einer zweiten Verzahnung mit 68 Zähnen;
- Fig. 6: Soll-Winkellagen einer ersten Verzahnung mit 23 Zähnen und einer zweiten Verzahnung mit 62 Zähnen;
- Fig. 7: Soll-Winkellagen einer ersten Verzahnung mit 23 Zähnen und einer zweiten Verzahnung mit 66 Zähnen;
- Fig. 8: Soll-Winkellagen einer ersten Verzahnung mit 23 Zähnen und einer zweiten Verzahnung mit 61 Zähnen;
- Fig. 9: Soll-Winkellagen einer ersten Verzahnung mit 24 Zähnen und einer zweiten Verzahnung mit 62 Zähnen;
- Fig. 10: Soll-Winkellagen einer ersten Verzahnung mit 24 Zähnen und einer zweiten Verzahnung mit 66 Zähnen;
- Fig. 11: Soll-Winkellagen einer ersten Verzahnung mit 24 Zähnen und einer zweiten Verzahnung mit 63 Zähnen;
- Fig. 12: Ist-Winkellagen einer ersten Verzahnung mit 23 Zähnen und einer zweiten Verzahnung mit 68 Zähnen;
- Fig. 13: eine Zuordnung der Ist-Winkellagen aus Fig. 12 zu den Soll-Winkellagen aus Fig. 5;
- Fig. 14: die Zuordnung der Ist-Winkellagen aus Fig. 12 zu den Soll-Winkellagen aus Fig. 5;
- Fig. 15: eine Identifikation eines Referenzzahns anhand der Zuordnung der Ist-Winkellagen aus Fig. 12 zu den Soll-Winkellagen aus Fig. 5;
- Fig. 16: einen Ablaufplan eines erfindungsgemäßen Verfahrens.

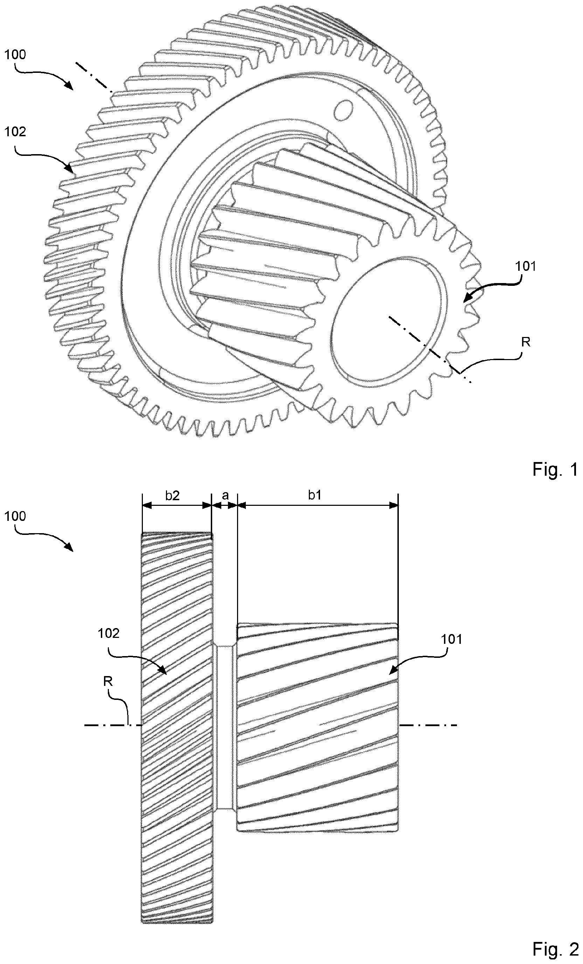

Fig. 1 zeigt ein Bauteil 100. Das Bauteil 100 hat eine erste Verzahnung 101 und eine zweite Verzahnung 102. Das Bauteil 100 besteht insbesondere aus einem gehärteten Stahlwerkstoff.

Die erste Verzahnung 101 weist einen axialen Abstand a zu der zweiten Verzahnung 102 auf, der geringer ist, als eine Breite b2 der zweiten Verzahnung 102 und gleichermaßen geringer ist als eine Breite b1 der ersten Verzahnung 101 (Fig. 2).

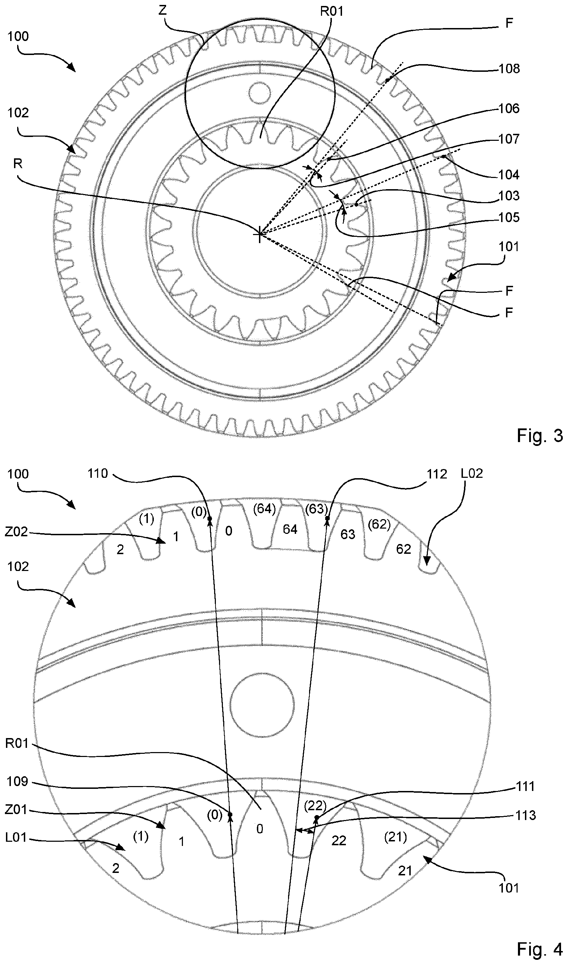

Um eine relative Winkellage der ersten Verzahnung 101 zur zweiten Verzahnung 102 zu definieren, ist es ausreichend, einen Soll-Winkelabstand z.B. für einen Referenzzahn R01 der ersten Verzahnung 101 relativ zu einem Zahn der zweiten Verzahnung 102 zu definieren (Fig. 3). Die relative Winkellage definiert insgesamt die Winkellage der Verzahnungen 101, 102 bezogen auf eine Rotationsachse R des Bauteils 100.

Im vorliegenden Beispiel wird der Fall diskutiert, dass zunächst die erste Verzahnung 101 hartfeinbearbeitet wird und anschließend die zweite Verzahnung 102 hartfeinbearbeitet wird. Demnach ist der Referenzzahn R01 an der ersten Verzahnung 101 ausgebildet, da bezüglich dieses Referenzzahns R01 ein Winkelabstand zu einem Zahn der zweiten Verzahnung 102 bemaßt und toleriert ist, um die relative Soll-Winkellage beim Hartfeinbearbeiten der zweiten Verzahnung 102 möglichst genau als Ist-Winkellage fertigen zu können.

Es versteht sich, dass gemäß alternativer Ausführungsbeispiel ein Zahn der zweiten Verzahnung 102 als Referenzzahn bestimmt werden kann, bezüglich dessen die erste Verzahnung ausgerichtet wird. Dieses Vorgehen wäre insbesondere für den Fall sinnvoll, dass die zweite Verzahnung vor der ersten Verzahnung hartfeinbearbeitet wird, und somit ein Winkelabstand eines Zahns der ersten Verzahnung 101 bezüglich eines Referenzzahns der zweiten Verzahnung bemaßt und toleriert ist, um die relative Winkellage anzugeben.

Es versteht sich, dass Lücken und/oder Zähne der Verzahnungen gleichermaßen zur Definition der relativen Winkellage herangezogen werden könnten, so dass z.B. ein Zahn-zu-Zahn-Winkelabstand, ein Lücke-zu-Lücke-Winkelabstand, ein Lücke-zu-Zahn-Winkelabstand oder ein Zahn-zu-Lücke-Winkelabstand zur Definition der relativen Winkellage der ersten Verzahnung zur zweiten Verzahnung, oder umgekehrt, angegeben werden kann. Grundsätzlich kann demnach jede der Lücken oder Zähne der ersten Verzahnung 101 und jede der Lücken oder Zähne der zweiten Verzahnung 102 zur Bemaßung und Tolerierung der relativen Winkellage zwischen der ersten und zweiten Verzahnung herangezogen werden, um diese relative Winkellage eindeutig zu definieren.

Wie bereits erwähnt, wird im vorliegenden Beispiel ein Zahn der ersten Verzahnung als Referenzzahn R01 definiert. Beispielsweise kann festgelegt sein, dass der Winkelabstand zwischen einer Flankenmitte 109 des Referenzzahns R01 der ersten Verzahnung 101 zu einer Flankenmitte 110 eines Zahns mit dem Index 0 der zweiten Verzahnung gleich 0 sein soll. Auf diese Weise ist die in den Figuren 1 - 4 gezeigte Soll-Winkellage der ersten Verzahnung 101 relativ zur zweiten Verzahnung eindeutig beschrieben.

Alternativ könnte jedoch auch ein zwischen einem Zahn mit dem Index "22" der ersten Verzahnung 101 und einem Zahn mit dem Index 63 der zweiten Verzahnung 113 entsprechend der Soll-Winkellage bestehender Winkel 113 zur eindeutigen Definition der Soll-Winkellage bemaßt und toleriert werden - so dass der Zahn mit dem Index "22" der ersten Verzahnung 101 als Referenzzahn definiert sein könnte. Wiederum wäre auch auf diese Weise die in den Figuren 1 - 4 gezeigte Soll-Winkellage der ersten Verzahnung 101 relativ zur zweiten Verzahnung eindeutig beschrieben.

Die Fig. 1 - 4 stellen exemplarisch eine zu fertigende Soll-Geometrie für das Bauteil 100 dar, welches mittels des erfindungsgemäßen Verfahrens hergestellt werden soll.

Fig. 4 zeigt eine vergrößerte Darstellung gemäß der Einzelheit Z aus Fig. 3. Die Zähne Z01 der ersten Verzahnung 101 sind beginnend mit dem Index 0 gegen den Uhrzeigersinn bis zum Index 22 aufsteigend durchnummeriert, sodass die erste Verzahnung 101 in diesem Beispiel 23 Zähne und 23 Lücken aufweist. Die Lücken sind entsprechend mit in Klammern gesetzten Nummerierungen bzw. Indizes ebenfalls von 0-22 aufsteigend durchnummeriert. Analog hierzu ist auch für die zweite Verzahnung 102 eine Nummerierung der Zähne in einer aufsteigenden Reihenfolge gegen den Uhrzeigersinn beginnend mit dem Zahn mit dem Index 0 bis hin zum Zahn mit den Index 64 erfolgt, sodass die zweite Verzahnung 102 im vorliegenden Beispiel 65 Zähne und 65 Lücken aufweist. Weiter sind die Lücken der Verzahnung 102 mit in Klammern gesetzten Nummerierungen von 0-64 ebenfalls gegensinnig zum Uhrzeigersinn nummeriert worden. Im vorliegenden Beispiel soll exemplarisch jeweils die linke Flanke des jeweiligen Zahns mit der Nummer "0" der ersten Verzahnung 101 und der zweiten Verzahnung 102 jeweils als Referenz dienen - wobei der Zahn mit der Nummer 0 der ersten Verzahnung 101 der Referenzzahn R01 ist und die Winkellage des Zahns mit der Nummer 0 der zweiten 102 bezüglich dieses Referenzzahn R01 bemaßt und toleriert ist.

Wie eingangs bereits erwähnt, besteht eine besondere Herausforderung darin, zwischen den einzelnen Fertigungsschritten und nach dem Umspannen des Bauteils 100 den Referenzzahn R01 automatisiert zu ermitteln. So kann beispielsweise die erste Verzahnung 101 auf einer ersten Werkzeugmaschine harfeinbearbeitet worden sein und zum Hartfeinbearbeiten der zweiten Verzahnung an eine weitere Werkzeugmaschine übergeben werden. Nach diesem erneuten Spannen oder während des Handhabens muss der Referenzzahn R01 identifiziert werden, um die Fertigung der relativen Winkellage zwischen der ersten Verzahnung 101 und der zweiten Verzahnung 102 entsprechend der Soll-Winkellage zu ermöglichen.

Die Identifikation des Referenzzahns R01 wird erfindungsgemäß dadurch erreicht, dass vorgegebenen Soll-Winkelabständen gemessene Ist-Winkelabstände zugeordnet werden, wobei die Soll-Winkelabstände vorgegebene Winkelabstände der Zähne Z01 und/oder Lücken L01 der ersten Verzahnung 101 relativ zu den Zähnen Z02 und/oder Lücken L02 der zweiten Verzahnung 102 entsprechend der vorgegebenen Soll-Winkellage sind.

Die gemessenen Ist-Winkelabstände sind die am bereitgestellten Bauteil 100 vor der Hartfeinbearbeiten der zweiten Verzahnung 102 bestehenden Winkelabstände der Zähne Z01 und/oder Lücken L01 der ersten Verzahnung 101 relativ zu den Zähnen Z02 und/oder Lücken L02 der zweiten Verzahnung 102.

Die Erfindung nutzt den Umstand, dass sich durch die vorgegebene Soll-Winkellage ein Muster relativer Winkellagen benachbarter Zähne Z02 bzw. nächstliegender Zähne Z02 und/oder Lücken L02 der zweiten Verzahnung 102 zu den Zähnen Z01 und/oder Lücken Z01 der ersten Verzahnung 101 ergibt.

In Fig. 3 ist ein Soll-Winkelabstand 105 zwischen einem Flankenpunkt 103 auf dem Teilkreis der ersten Verzahnung 101 und einem Flankenpunkt 104 auf dem Teilkreis der zweiten Verzahnung 102 in einer Axialprojektion dargestellt. Weiter ist ein Soll-Winkelabstand 107 zwischen einem Flankenpunkt 106 am Teilkreis der ersten Verzahnung 101 und einem weiteren benachbarten Flankenpunkt 108 auf dem Teilkreis der zweiten Verzahnung 102 dargestellt. Als benachbarte bzw. nächstgelegene Flanken F gelten ausgehend von der ersten Verzahnung 101 betrachtet die jeweils gegen den Uhrzeigersinn um die Rotationsachse R betrachtet auf eine Flanke F der ersten Verzahnung 101 folgende nächstgelegene Flanke F der zweiten Verzahnung 102.

Es ist ersichtlich, dass der Winkelabstand 107 kleiner ist als der Winkelabstand 105. Auf diese Weise kann für jeden Zahn oder für jede Lücke der Verzahnung 101 ein Lücke-zu-Lücke-Winkelabstand oder ein Zahn-zu-Zahn Abstand oder ein Zahn-zu-Lücke-Abstand zum jeweils nächstliegenden Zahn Z02 oder zur nächstliegenden Lücke L02 der zweiten Verzahnung 102 angegeben werden.

Für ein Bauteil 100, das eine erste Verzahnung 101 und eine zweite Verzahnung 102 mit vorgegebener relativer Winkellage aufweist, können die Soll-Winkelabstände nächstgelegener Zähne und/oder Lücken aufeinanderfolgend im Uhrzeigersinn oder entgegen dem Uhrzeigersinn sortiert angegeben werden, um ein Soll-Muster der Soll-Winkelabstände anzugeben.

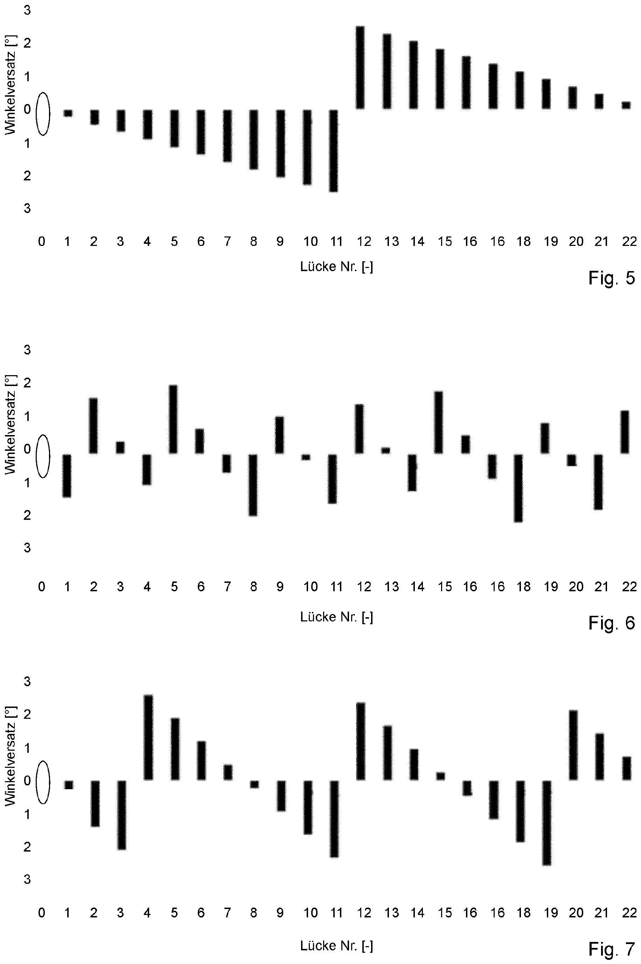

Die Figuren 5 - 11 zeigen derartige Soll-Muster für verschiedene Zähnezahlen der ersten Verzahnung 101 und der zweiten Verzahnung, um den Effekt der Zähnezahlen auf die sich ergebenden Soll-Muster zu verdeutlichen.

Fig. 5 zeigt ein Bespiel der Winkelabstände bzw. des Winkelversatzes, wobei die erste Verzahnung 101 23 Zähne und die zweite Verzahnung 102 68 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt dabei analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung teilerfremd sind, ergibt sich für jede Lücke der ersten Verzahnung 101 ein individueller Winkelversatz zur jeweils nächstgelegenen Lücke der zweiten Verzahnung. D.h. es gibt genau einen-Lücke-zu Lücke-Winkelversatz, der 0 beträgt - und zwar für die Referenzlücke der ersten Verzahnung 101 mit dem Index 0.

Wird nun für ein bereitgestelltes Bauteil nach dem Hartfeinbearbeiten der ersten Verzahnung 101 und vor dem Hartfeinbearbeiten der zweiten Verzahnung 102 ein Ist-Muster der bestehenden Winkelabstände gemessen, so kann die Referenzlücke der ersten Verzahnung 101 mit dem Index 0 durch einen Abgleich mit dem Soll-Muster gemäß Fig. 5 identifiziert werden.

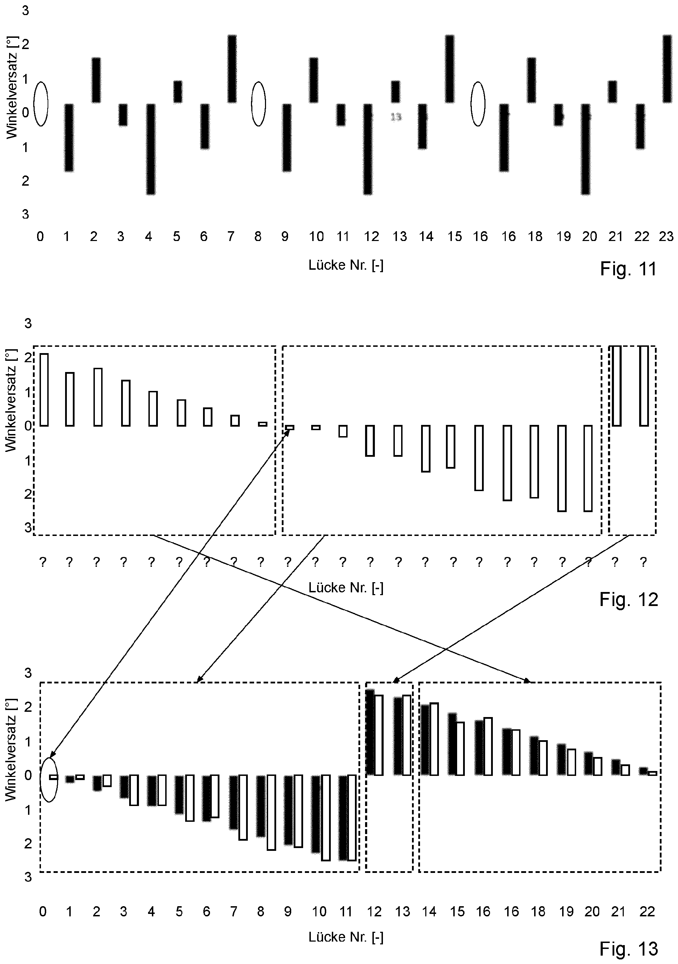

Fig. 12 zeigt exemplarisch und schematisch ein gemessenes Ist-Muster, wobei die Ist-Winkelabstände nächstliegender Zähne aufeinanderfolgend entsprechend dem Drehsinn des Soll-Musters sortiert angegeben werden, um das Ist-Muster der Ist-Winkelabstände anzugeben. Der gemessene Winkelabstand einer Lücke der ersten Verzahnung zur jeweils nächstgelegenen Lücke der zweiten Verzahnung ist über der Lückenzahl der ersten Verzahnung 101 aufgetragen.

Die Indizes der Lücken der ersten Verzahnung 101 sind in Fig. 12 zunächst durch Fragezeichen ersetzt worden, da zunächst allein durch Betrachtung des Ist-Musters nicht klar ist, welche Lücken den gemessenen Winkelabständen zuzuordnen sind. So sind drei Winkelabstände mit einem Betrag nahe 0 zu erkennen, die unter Berücksichtigung von Fertigungstoleranzen jeweils zur Referenzlücke gehören könnten.

Das Ist-Muster wird softwarebasiert z.B. durch "Best-Fit" über das Soll-Muster gelegt, um die Lücken zu identifizieren. Bildlich gesprochen wird das Ist-Muster bzw. die gemessene Ist-Verzahnung so lange relativ zum Soll-Muster bzw. zur Soll-Verzahnung "verdreht", bis sich die Muster mit möglichst geringer Abweichung decken.

Das Zuordnen des Ist-Musters gemäß Fig. 12 zum Soll-Muster ist in Fig. 13 veranschaulicht. Auf diese Weise kann die Referenzlücke mit dem Index 0 eindeutig am Ist-Muster identifiziert werden, um das Einmitten für die Hartfeinbearbeitung der zweiten Verzahnung und die zuverlässige Fertigung der relativen Winkellage der Verzahnungen 101, 102 zu ermöglichen.

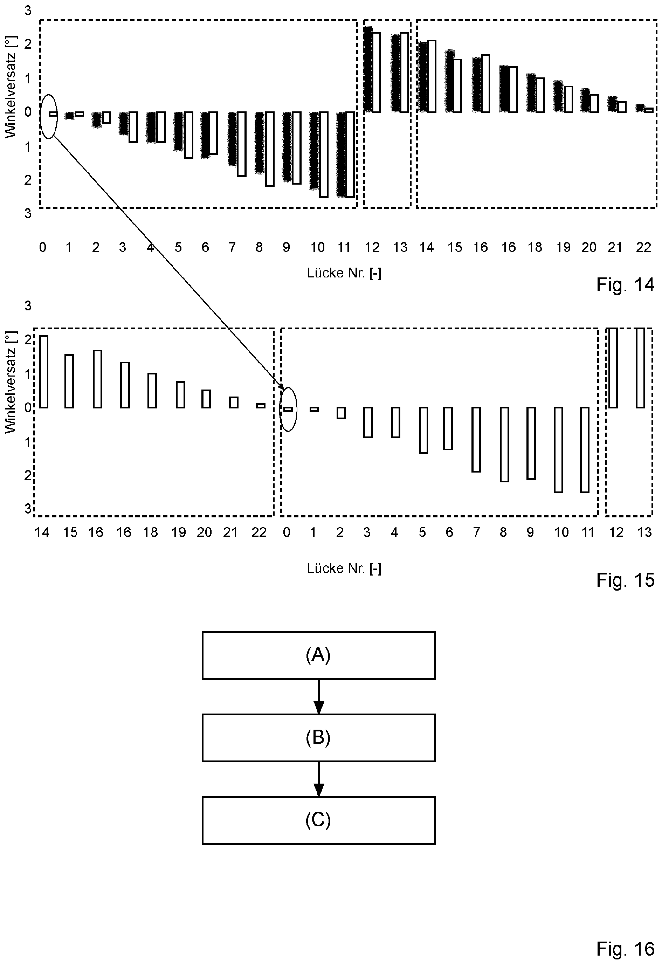

Die Figuren 14 und 15 veranschaulichen den vollständigen Abgleich, wobei jede Lücke der ersten Verzahnung 101 eindeutig am gemessenen Ist-Muster identifiziert worden ist.

Da es sich insgesamt um eine relative Lage zwischen der ersten Verzahnung 101 und der zweiten Verzahnung 102 handelt, ist es irrelevant, ob der Soll-Winkelabstand ausgehend von der ersten Verzahnung 101 betrachtet relativ zur zweiten Verzahnung 102 gemessen wird oder umgekehrt. Gleichermaßen ist irrelevant, ob zur Definition der Winkellage eine Zahnflanke, eine Position einer Lücke oder eine Position eines Zahns der ersten Verzahnung als Referenz herangezogen wird, da die relativen Lagen dieser Referenzen sich ineinander umrechnen lassen und lediglich ein messbarer Bezug an der ersten Verzahnung vorhanden sein muss.

Fig. 6 zeigt ein Bespiel der Winkelabstände bzw. des Winkelversatzes, wobei die erste Verzahnung 101 23 Zähne und die zweite Verzahnung 102 62 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung teilerfremd sind, ergibt sich für jede Lücke der ersten Verzahnung 101 ein individueller Winkelversatz zur jeweils nächstgelegenen Lücke der zweiten Verzahnung. D.h. es gibt genau einen Lücke-zu-Lücke Winkelversatz, der 0 beträgt - und zwar für die Referenzlücke der ersten Verzahnung 101 mit dem Index 0.

Fig. 7 zeigt ein Bespiel der Winkelabstände bzw. des Winkelversatzes, wobei die erste Verzahnung 101 23 Zähne und die zweite Verzahnung 102 66 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung teilerfremd sind, ergibt sich für jede Lücke der ersten Verzahnung 101 ein individueller Winkelversatz zur jeweils nächstgelegenen Lücke der zweiten Verzahnung. D.h. es gibt genau einen Lücke-zu-Lücke-Winkelversatz, der Null beträgt - und zwar für die Referenzlücke der ersten Verzahnung 101 mit dem Index 0.

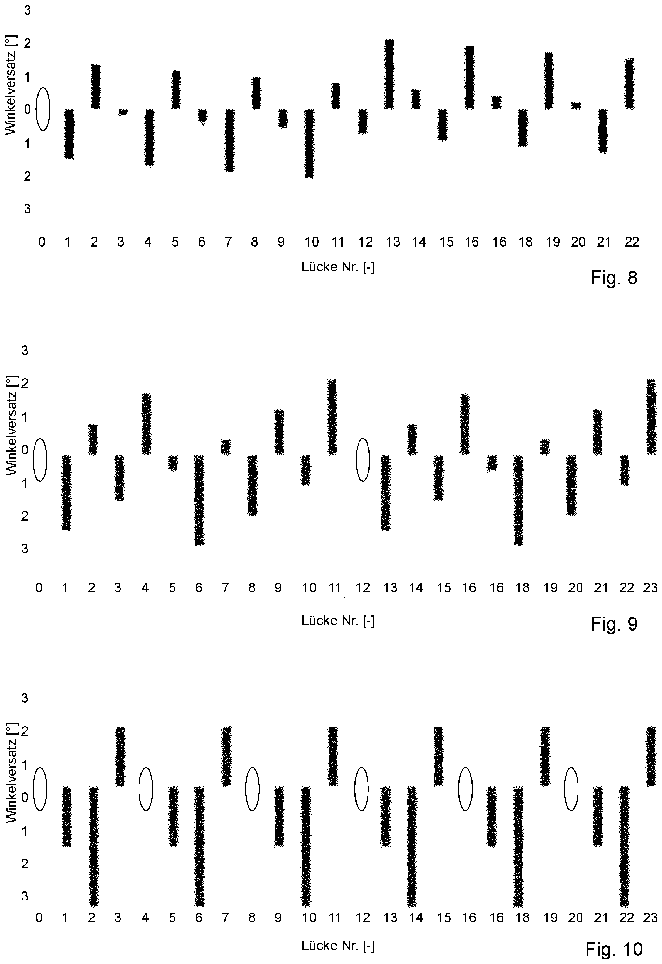

Fig. 8 zeigt ein Bespiel der Winkelabstände bzw. des Winkelversatzes, wobei die erste Verzahnung 101 23 Zähne und die zweite Verzahnung 102 61 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung teilerfremd sind, ergibt sich für jede Lücke der ersten Verzahnung 101 ein individueller Winkelversatz zur jeweils nächstgelegenen Lücke der zweiten Verzahnung. D.h. es gibt genau einen-Lücke-zu-Lücke Winkelversatz, der 0 beträgt - und zwar für die Referenzlücke der ersten Verzahnung 101 mit dem Index 0.

Fig. 9 zeigt ein Bespiel der Winkelabstände bzw. des Winkelversatzes, wobei die erste Verzahnung 101 24 Zähne und die zweite Verzahnung 102 62 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung nicht teilerfremd sind, d.h. gleiche Teiler aufweisen, ergibt sich nicht für jede Lücke der ersten Verzahnung 101 ein individueller Winkelversatz zur jeweils nächstgelegenen Lücke der zweiten Verzahnung, sondern es ergeben sich wiederholende Muster. D.h. es gibt genau zweimal einen Lücke-zu-Lücke Winkelversatz, der 0 beträgt - und zwar für die Lücken der ersten Verzahnung 101 mit dem Index 0 und mit dem Index 12. Jede dieser Lücken der ersten Verzahnung 101 könnte daher als Referenzlücke verwendet werden.

Fig. 10 zeigt ein Bespiel der Winkelabstände bzw. des Winkelversatzes, wobei die erste Verzahnung 101 24 Zähne und die zweite Verzahnung 102 66 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung nicht teilerfremd sind, d.h. gleiche Teiler aufweisen, ergibt sich nicht für jede Lücke der ersten Verzahnung 101 ein individueller Winkelversatz zur jeweils nächstgelegenen Lücke der zweiten Verzahnung, sondern es ergeben sich wiederholende Muster. D.h. es gibt genau sechsmal einen Lücke-zu-Lücke Winkelversatz, der 0 beträgt - und zwar für die Lücken der ersten Verzahnung 101 mit den Indizes 0, 4, 8, 12, 16, 20. Jede dieser Lücken könnte daher als Referenzlücke verwendet werden.

Fig. 11 zeigt ein Bespiel der Winkelabstände bzw. des Winkelversatzes, wobei die erste Verzahnung 101 24 Zähne und die zweite Verzahnung 102 63 Zähne aufweist. Der Winkelabstand einer Lücke der ersten Verzahnung zur jeweils nächstgelegenen Lücke der zweiten Verzahnung ist über der Lückenzahl der ersten Verzahnung 101 aufgetragen. Die Nummerierung der Lücken erfolgt analog zu Fig. 4. Die Soll-Winkellage der ersten Lücke der ersten Verzahnung 101 zur ersten Lücke der zweiten Verzahnung 102 ist gleich 0 - wobei die erste Lücke der ersten Verzahnung die Referenzlücke ist, bezüglich derer die erste Lücke der zweiten Verzahnung mit dem Winkelabstand vom Betrag 0 bemaßt und toleriert ist. Für die Lücke der ersten Verzahnung 101 mit dem Index 0 beträgt der Winkelversatz zur nächstgelegenen Lücke der zweiten Verzahnung 102 mit dem Index 0 daher 0.

Da die Zähnezahlen der ersten Verzahnung 101 und zweiten Verzahnung nicht teilerfremd sind, d.h. gleiche Teiler aufweisen, ergibt sich nicht für jede Lücke der ersten Verzahnung 101 ein individueller Winkelversatz zur jeweils nächstgelegenen Lücke der zweiten Verzahnung, sondern es ergeben sich wiederholende Muster. D.h. es gibt genau dreimal einen Lücke-zu-Lücke Winkelversatz, der 0 beträgt - und zwar für die Lücken der ersten Verzahnung 101 mit den Indizes 0, 8, 16. Jede dieser Lücken könnte daher als Referenzlücke verwendet werden.

In den vorliegenden Beispielen ist jeweils die erste Lücke als Referenz herangezogen worden. Dieses Vorgehen diente lediglich der einfachen und anschaulichen Darstellung der erfindungsgemäßen Vorgehensweise. Es ist jedoch ersichtlich, dass jede weitere Lücke der ersten Verzahnung gleichermaßen als Referenz verwendet werden könnte.

Insgesamt kann daher erfindungsgemäß ein Verfahren angegeben werden, mit den Verfahrensschritten:

(A) Bereitstellen eines Bauteils 100, wobei das Bauteil 100 eine erste Verzahnung 101 und eine zweite Verzahnung 102 aufweist, wobei für das Bauteil 101 eine Soll-Winkellage der zweiten Verzahnung 102 relativ zur ersten Verzahnung 101 definiert ist, und wobei die Soll-Winkellage als Soll-Winkelabstand eines Referenzzahns R01 und/oder einer Referenzlücke (0) der ersten Verzahnung 101 zu einem Zahn R02 und/oder einer Lücke (0) der zweiten Verzahnung 102 angegeben ist;

(B) Identifikation des Referenzzahns R01 und/oder der Referenzlücke (0) der ersten Verzahnung 101, wobei die Identifikation des Referenzzahns R01 und/oder der Referenzlücke (0) der ersten Verzahnung 101 erfolgt, indem vorgegebenen Soll-Winkelabständen gemessene Ist-Winkelabstände zugeordnet werden, wobei die Soll-Winkelabstände vorgegebene Winkelabstände der Zähne und/oder Lücken der ersten Verzahnung 101 relativ zu den Zähnen und/oder Lücken der zweiten Verzahnung 102 entsprechend der vorgegebenen Soll-Winkellage sind und wobei die gemessenen Ist-Winkelabstände die am bereitgestellten Bauteil 100 vor der Hartfeinbearbeiten der zweiten Verzahnung 102 bestehenden Winkelabstände der Zähne und/oder Lücken der ersten Verzahnung 101 relativ zu den Zähnen und/oder Lücken der zweiten Verzahnung 102 sind.;

(C) Hartfeinbearbeiten der zweiten Verzahnung 102 des Bauteils 100, wobei die Zähne der zweiten Verzahnung 102 unter Berücksichtigung der Position des Referenzzahns R01 und/oder der Referenzlücke (0) der ersten Verzahnung (101) bearbeitet werden, um eine Ist-Winkellage der zweiten Verzahnung (102) relativ zur ersten Verzahnung (101) entsprechend der vorgegebenen Soll-Winkellage zu fertigen.

Vorliegend ist die erste Verzahnung 101 des bereitgestellten Bauteils 100 vor dem Hartfeinbearbeiten der zweiten Verzahnung 102 und vor der Identifikation des Referenzzahns und/oder der Referenzlücke bereits hartfeinbearbeitet worden. Nach dem Hartfeinbearbeiten der ersten Verzahnung 101 und vor dem Hartfeinbearbeiten der zweiten Verzahnung 102 ist ein Umspannen des Bauteils 100 erfolgt. Das Hartfeinbearbeiten der ersten Verzahnung 101 erfolgt auf einer ersten Werkzeugmaschine erfolgt und das Hartfeinbearbeiten der zweiten Verzahnung 102 erfolgt auf einer zweiten Werkzeugmaschine.

Soweit eine Referenz der Winkellage anhand einer Lücke der ersten Verzahnung relativ zu einer Lücke der zweiten Verzahnung definiert wird, kann von einem Referenzlückenpaar gesprochen werden.

Soweit eine Referenz der Winkellage anhand eines Zahns der ersten Verzahnung relativ zu einem Zahn der zweiten Verzahnung definiert wird, kann von einem Referenzzahnpaar gesprochen werden.

### BEZUGSZEICHEN

- 100: Bauteil
- 101: erste Verzahnung
- 102: zweite Verzahnung
- 103: Flankenpunkt
- 104: Flankenpunkt
- 105: Winkelversatz
- 106: Flankenpunkt
- 107: Winkelversatz
- 108: Flankenpunkt
- 109: Flankenpunkt
- 111: Flankenpunkt
- 112: Flankenpunkt
- 113: Winkelversatz
- F: Flanke
- R: Rotationsachse
- R01: Referenzzahn
- R02: Referenzzahn
- a: Abstand
- b1: Breite
- b2: Breite
- (A): Verfahrensschritt
- (B): Verfahrensschritt
- (C): Verfahrensschritt

## Patentansprüche

1. Verfahren, mit den Verfahrensschritten:
- Bereitstellen eines Bauteils (100), wobei das Bauteil (100) eine erste Verzahnung (101) und eine zweite Verzahnung (102) aufweist, wobei für das Bauteil (101) eine Soll-Winkellage der zweiten Verzahnung (102) relativ zur ersten Verzahnung (101) definiert ist, und wobei die Soll-Winkellage als Soll-Winkelabstand eines Referenzzahns (R01) und/oder einer Referenzlücke (0) der ersten Verzahnung (101) zu einem Zahn (R02) und/oder einer Lücke (0) der zweiten Verzahnung (102) angegeben ist;
- Identifikation des Referenzzahns (R01) und/oder der Referenzlücke (0) der ersten Verzahnung (101);
- Hartfeinbearbeiten der zweiten Verzahnung (102) des Bauteils (100), wobei die Zähne der zweiten Verzahnung (102) unter Berücksichtigung der Position des Referenzzahns (R01) und/oder der Referenzlücke (0) der ersten Verzahnung (101) bearbeitet werden, um eine Ist-Winkellage der zweiten Verzahnung (102) relativ zur ersten Verzahnung (101) entsprechend der vorgegebenen Soll-Winkellage zu fertigen;
**dadurch gekennzeichnet, dass**
- die Identifikation des Referenzzahns (R01) und/oder der Referenzlücke (0) der ersten Verzahnung (101) erfolgt, indem vorgegebenen Soll-Winkelabständen gemessene Ist-Winkelabstände zugeordnet werden,
- wobei die Soll-Winkelabstände vorgegebene Winkelabstände der Zähne und/oder Lücken der ersten Verzahnung (101) relativ zu den Zähnen und/oder Lücken der zweiten Verzahnung (102) entsprechend der vorgegebenen Soll-Winkellage sind und
- wobei die gemessenen Ist-Winkelabstände die am bereitgestellten Bauteil (100) vor der Hartfeinbearbeiten der zweiten Verzahnung (102) bestehenden Winkelabstände der Zähne und/oder Lücken der ersten Verzahnung (101) relativ zu den Zähnen und/oder Lücken der zweiten Verzahnung (102) sind.

2. Verfahren nach Anspruch 1,
**dadurch gekennzeichnet, dass**
- die Soll-Winkelabstände der Zähne und/oder Lücken, insbesondere nächstgelegener Zähne und/oder Lücken, aufeinanderfolgend im Uhrzeigersinn oder entgegen dem Uhrzeigersinn sortiert angegeben werden, um ein Soll-Muster der Soll-Winkelabstände anzugeben,
- die Ist-Winkelabstände nächstgelegener Zähne aufeinanderfolgend im Uhrzeigersinn oder entgegen dem Uhrzeigersinn sortiert angegeben werden, um ein Ist-Muster der Ist-Winkelabstände anzugeben,
- wobei die Identifikation des Referenzzahns (R01) und/oder der Referenzlücke (0) anhand eines Vergleichs des Ist-Musters mit dem Soll-Muster erfolgt.

3. Verfahren nach Anspruch 2,
**dadurch gekennzeichnet, dass**
der Vergleich des Ist-Musters mit dem Soll-Muster anhand einer mathematischen Methode erfolgt, wie z.B. Best-Fit oder dergleichen, insbesondere softwarebasiert.

4. Verfahren nach Anspruch 2 oder Anspruch 3,
**dadurch gekennzeichnet, dass**
als Ergebnis der Zuordnung der Soll-Winkelabstände zu gemessenen Ist-Winkelabstände der Referenzzahn derjenige Zahn der ersten Verzahnung des Bauteils ist, dessen Ist-Winkelabstand dem Soll-Winkelabstand entsprechend der vorgegebenen Soll-Winkellage entspricht, wobei insbesondere ein Abgleich des Soll-Winkelabstands zum Ist-Winkelabstand für einen oder mehrere weitere Zähne und/oder Lücken der ersten Verzahnung erfolgt, um die Identifikation des Referenzzahns zu verifizieren
und/oder
als Ergebnis der Zuordnung der Soll-Winkelabstände zu gemessenen Ist-Winkelabstände die Referenzlücke diejenige Lücke der ersten Verzahnung des Bauteils ist, deren Ist-Winkelabstand dem Soll-Winkelabstand entsprechend der vorgegebenen Soll-Winkellage entspricht, wobei insbesondere ein Abgleich des Soll-Winkelabstands zum Ist-Winkelabstand für einen oder mehrere weitere Zähne und/oder Lücken der ersten Verzahnung erfolgt, um die Identifikation der Referenzlücke zu verifizieren.

5. Verfahren nach Anspruch nach einem der voranstehenden Ansprüche,
**dadurch gekennzeichnet, dass**
die erste Verzahnung (101) des bereitgestellten Bauteils (100) vor dem Hartfeinbearbeiten der zweiten Verzahnung (102) und vor der Identifikation des Referenzzahns (R01) und/oder der Referenzlücke (0) bereits hartfeinbearbeitet worden ist.

6. Verfahren nach Anspruch 5,
**dadurch gekennzeichnet,**
**dass** nach dem Hartfeinbearbeiten der ersten Verzahnung (101) und vor dem Hartfeinbearbeiten der zweiten Verzahnung (102) ein Umspannen des Bauteils (100) erfolgt ist
und/oder
**dass** das Hartfeinbearbeiten der ersten Verzahnung (101) auf einer ersten Werkzeugmaschine erfolgt und das Hartfeinbearbeiten der zweiten Verzahnung (102) auf einer zweiten Werkzeugmaschine erfolgt.

7. Verfahren nach einem der voranstehenden Ansprüche,
**dadurch gekennzeichnet, dass**
das Hartfeinbearbeiten der ersten Verzahnung (101) ein Schaben oder ein Hartschälen oder ein Honen ist und/oder das Hartfeinbearbeiten der zweiten Verzahnung (102) ein Schleifen ist, insbesondere ein Wälzschleifen.

8. Verfahren nach einem der voranstehenden Ansprüche,
**dadurch gekennzeichnet, dass**
die erste Verzahnung (101) eine geringere Zähnezahl aufweist als die zweite Verzahnung (102)
und/oder
die erste Verzahnung (101) einen geringeren Teilkreisdurchmesser aufweist als die zweite Verzahnung (102).

9. Verfahren nach einem der voranstehenden Ansprüche,
**dadurch gekennzeichnet, dass**
die Zähnezahl der ersten Verzahnung (101) und die Zähnezahl der zweiten Verzahnung (102) teilerfremd sind, wobei genau ein Zahn und/oder genau eine Lücke der ersten Verzahnung (101) als Referenzzahn und/oder als Referenzlücke definiert ist.

10. Verfahren nach einem der voranstehenden Ansprüche,
**dadurch gekennzeichnet, dass**
dass die Zähnezahl der ersten Verzahnung (101) und die Zähnezahl der zweiten Verzahnung (102) gleiche Teiler aufweisen, wobei eine Anzahl als Referenzzähne geeigneter Zähne dem größten gemeinsamen Teiler bezüglich der Zähnezahl der ersten Verzahnung (101) und der Zähnezahl der zweiten Verzahnung (102) entspricht und wobei einer dieser als Referenzahn geeigneten Zähne der ersten Verzahnung (101) als Referenzzahn definiert ist
und/oder
dass die Zähnezahl der ersten Verzahnung (101) und die Zähnezahl der zweiten Verzahnung (102) gleiche Teiler aufweisen, wobei eine Anzahl als Referenzlücken geeigneter Lücken dem größten gemeinsamen Teiler bezüglich der Zähnezahl der ersten Verzahnung (101) und der Zähnezahl der zweiten Verzahnung (102) entspricht und wobei einer dieser als Referenzlücke geeigneten Lücken der ersten Verzahnung (101) als Referenzlücke definiert ist.
